# EUROPÄISCHE PATENTSCHRIFT

(11) **EP 3 104 953 B1**
(45) Veröffentlichungstag und Bekanntmachung des Hinweises auf die Patenterteilung: **08.11.2017**
(21) Anmeldenummer: 15707273.7
(22) Anmeldetag: 07.02.2015
(51) Int. Cl.: B01D 39/16

(54) **KRAFTSTOFF-FILTERELEMENT**
FUEL FILTER ELEMENT
ÉLÉMENT DE FILTRATION À CARBURANT

(30) Priorität: 13.02.2014 DE 102014002033
(43) Veröffentlichungstag der Anmeldung: 21.12.2016
(73) Patentinhaber: Hydac Fluidcarecenter GmbH, 66280 Sulzbach/Saar (DE)
(72) Erfinder: BRALL, Sven, 66111 Saarbrücken (DE); EBERLE, Richard, 66399 Ormesheim (DE); HOFFMANN, Florian, 66589 Merchweiler (DE)
(74) Vertreter: Bartels & Partner
(86) Internationale Anmeldenummer: PCT/EP2015/000255
(87) Internationale Veröffentlichungsnummer: WO 2015/120969

(56) Entgegenhaltungen:
- WO-A1-2007/087326
- DE-A1-102011 104 628
- US-A1- 2005 079 379

## Beschreibung

Die Erfindung betrifft ein Kraftstoff-Filterelement, zur Behandlung von Fluiden in Form von Diesel, mit einem Filtermedium, mit den Merkmalen im Oberbegriff von Anspruch 1.

Insbesondere in Kraftstoffen mit einem erhöhten oder sonst hohen Wasseranteil können neben Bakterien auch Mikroorganismen oder Pilze wachsen, die eine Art Schleim ausbilden, die nicht nur den Verbrennungsprozess im Motor nachteilig beeinflussen können, sondern insbesondere auch kraftstoffführende Bauteile zusetzen, beispielsweise in Form von als Kraftstofffilter dienenden Filterelementen.

Die angesprochene Schleimbildung wird fachsprachlich auch als Dieselpest bezeichnet, die auch ursächlich für Korrosionsschäden an der Kraftstoffanlage sein kann. Insbesondere in einem Dieselkraftstoff vorhandene Mikroorganismen können den in einem Tank regelmäßig und zum Teil länger bevorrateten Dieselkraftstoff altern lassen und dergestalt biologisch in nachteiliger, nicht erwünschter Art abbauen. Die dahingehenden Korrosions- und Oxidationsvorgänge werden noch begünstigt, sofern aus Biomasse wie Raps oder Soja Biokraftstoffe hergestellt werden, die dann einen idealen Nährboden für Bakterien, Mikroorganismen und Pilze ausbilden.

Aus der US 2005/0079379 A1, der WO 2007/087326 A1 und der DE 10 2011 104 628 A1 gehen Luftfilter hervor, deren Filtermedien jeweils einen Wirkstoff mit antimikrobiellen Eigenschaften aufweisen.

Ausgehend von diesem Stand der Technik liegt der Erfindung die Aufgabe zugrunde, ein Kraftstoff-Filterelement und ein Filterelement zur Verfügung zu stellen, das im Bereich der Dieselfiltration die vorstehend als nachteilig erkannten Effekte vermeiden hilft.

Eine dahingehende Aufgabe lösen Filterelemente mit den Merkmalen des Patentanspruchs 1 oder 11 in ihrer Gesamtheit.

Gemäß dem kennzeichnenden Teil des Patentanspruches 1 besteht eine wesentliche Besonderheit der Erfindung darin, dass das jeweils zum Einsatz kommende Filtermedium zumindest einen Wirkstoff mit antimikrobiellen Eigenschaften aufweist. Dank dieser Eigenschaft lassen sich die gegebenenfalls im Diesel vorhandene Bakterien, Mikroorganismen oder Pilze sowie vergleichbar in der Natur vorkommende biologische Strukturen in einen Zustand bringen, dass sie für den (Bio-)Dieselkraftstoff keinen schädlichen oder schädigenden Einfluss mehr ausüben können, was auch für die sonstigen Fluidkomponenten, wie Tank, Kraftstoffleitungen, Kraftstofffilter, Motor und dessen Einspritzdüsen (Common-Rail-System) etc., zutrifft. Durch die aktive Zerstörung der jeweiligen biologischen Struktur unter dem Einfluss des antimikrobiellen Wirkstoffes wird diese in eine Art im Fluid aufgelösten Zustand überführt, so dass das angesprochene biologische Eintragsmaterial selbst nicht-reaktiver Bestandteil des Fluids wird, das insoweit dann hemmnisfrei in Diesel-Hydraulikkreisläufen oder sonstigen Arbeitskreisläufen geführt werden kann.

Neben der Bekämpfung der angesprochenen Dieselpest ist dadurch auch sichergestellt, dass fluidführende Maschinenbauteile allgemeiner Bauweise gegenüber durch Biokorrosion verursachten Schäden geschützt sind. Ferner ist der Diesel gegen biologischen Abbau durch das biologische Eintragsmaterial, wie Bakterien, Mikroorganismen oder Pilzen etc., geschützt. Ferner ergeben sich längere Filterstandzeiten bei der Verwendung von Kraftstoffen mit hohen Anteilen an aus Biomasse gewonnenen Biokraftstoffanteilen, die darüber hinaus regelmäßig einen erhöhten Wasseranteil aufweisen. Dies hat so keine Entsprechung im Stand der Technik.

Die vorstehenden Ausführungen verdeutlichen, dass die anspruchsgemäße Angabe Diesel nicht nur die üblichen dahingehenden mineralischen Kraftstoffe mit erfassen soll, sondern vielmehr auch synthetischen Diesel sowie insbesondere Biodiesel. Das Hauptanwendungsgebiet der vorliegenden Erfindung ist auf Biodiesel-Kraftstoff gerichtet. Gemäß Wikipedia wird Bio-diesel (seltener Agrodiesel) chemisch auch als Fettsäuremethylester bezeichnet und ist ein Kraftstoff, der in der Verwendung dem mineralischen Dieselkraftstoff gleichkommt. Die chemische Industrie gewinnt Biodiesel regelmäßig durch Umesterung pflanzlicher oder tierischer Fette und Öle mit einwertigen Alkoholen wie Methanol oder Ethanol. Synthetischer Kraftstoff ist laut Wikipedia-Eintrag ein bestimmter Kraftstoff, der sich von konventionellen Kraftstoffen (Diesel, Benzin, Kerosin etc.) durch ein aufwendigeres Herstellungsverfahren (Veränderung der chemischen Struktur) unterscheidet. Kennzeichnend ist dabei das Ersetzen von Erdöl als Rohstoffquelle. Auch gasförmige Kraftstoffe wie Wasserstoff, Methan oder Ölprodukte aus unkonventionellen Rohstoffquellen wie Ölsand oder Ölschiefer werden u.a. zu den synthetischen Kraftstoffen gezählt.

Bei einer besonders bevorzugten Ausführungsform des erfindungsgemäßen Filterelementes ist vorgesehen, dass der jeweilige Wirkstoff mindestens eine Komponente, die eine ionische Zerstörung einer Bakterienzellwand ermöglicht, und eine weitere Komponente aufweist, die eine physische Unterbrechung einer Bakterienzellmembran erlaubt. Vorzugsweise ist dabei weiter vorgesehen, dass die die ionische Zerstörung der Bakterienzellwand bewirkende Wirkstoffkomponente einen Stickstoffanteil, vorzugsweise in Form positiv geladener Stickstoffmoleküle aufweist, die bewirken, dass in dem Diesel befindliches biologisches Eintragsmaterial, wie Bakterien, Mikroorganismen und Pilze, angelockt wird und an den jeweiligen Wirkstoff andockt, so dass das biologische Eintragsmaterial im Rahmen einer Art Gradientbewegung dem jeweiligen Wirkstoff zwangsweise zugeführt wird, und mindestens eine weitere Komponente des angesprochenen Wirkstoffes verfügt über vorzugsweise kettenförmige Kohlenwasserstoffverbindungen, die dann die jeweilige an den Wirkstoff angedockte Zellmembran oder Zellwand weitgehend oder sogar vollständig zerstören, zumindest aber reaktiv unwirksam werden lassen.

Sofern das jeweilige Filterelement bevorzugt einen Wirkstoff mit einer dritten Wirkkomponente einsetzt, die eine chemische Bindung des Wirkstoffs auf dem Filtermaterial des Filtermediums ermöglicht, ist eine sichere Anbindung des Wirkmechanismus im Filterelementmaterial erreicht und kann im Fluid- oder Filtrationsbetrieb nicht ungewollt ausgeschwemmt werden.

Insbesondere im hydrolisierten Zustand, also in Form einer wässrigen Lösung kann die dritte Komponente im Rahmen einer Quervernetzung an dem Filterelementmaterial bleibend angreifen und sich an diesem unter Bildung einer chemischen Bindung vorzugsweise intrinsisch festsetzen. Anstelle einer hydrolisierten Anbindung besteht auch die Möglichkeit, spezielle Bindermaterialien vorzusehen, die vorzugsweise intrinsisch eine Anbindung des jeweiligen Wirkstoffes an das Filtermedium des Filterelementes erlauben.

Bei einer weiteren besonders bevorzugten Ausführungsform der erfindungsgemäßen Filterelementlösung ist der jeweilige Wirkstoff aus einer Silikatverbindung, vorzugsweise in Form einer Ammonium-Silikatverbindung, gebildet. Alternativ können auch Biozide, vorzugsweise ein Breitbandbiozid, eingesetzt werden. Sofern Silikatverbindungen zum Einsatz kommen, bestehen diese vorzugsweise aus siliziumfunktionalisierten Tetraalkylammonium-Verbindungen oder weisen einen Ammoniumchlorid-Anteil auf, wie beispielsweise im Rahmen der Verbindung 3-(tri-methoxylsilyl) propy-Idimethyl octadecyl ammonium chlorid.

Sofern zusätzlich oder alternativ als Wirkstoff Biozide zum Einsatz kommen, findet bevorzugt ein Breitbandbiozid Anwendung, wie beispielsweise Octylisothiazolinon.

Damit das Filtermedium auch den Anforderungen an eine Partikelfiltration in üblicher Weise gerecht werden kann, ist das Filtermedium bevorzugt mehrlagig und plissiert ausgebildet, wobei vorzugsweise eine Lage, die dem Diesel anströmseitig zugewandt ist, als Vlies oder Vliesstoff ausgebildet, den jeweils vorstehend beschriebenen Wirkstoff aufweist.

Das angesprochene Vlies oder der Vliesstoff selbst sind vorzugsweise dreilagig ausgebildet und können zur Erhöhung ihrer Festigkeit im Fluidbetrieb mit dem Filterelement sich gegenüber einem Kunststoffgitter abstützen, das vorzugsweise aus einem Polyamidwerkstoff besteht.

Im Folgenden wird die erfindungsgemäße Kraftstoff-Filterelementlösung anhand der Zeichnung näher erläutert. Dabei zeigen in prinzipieller und nicht maßstäblicher Darstellung:
- Fig. 1: in perspektivischer und teilweise aufgeschnittener Darstellung eine Ausführungsform des beanspruchten Filterelements als Auswechseleinheit;
- Fig. 2 und 3: in der Art von chemischen Strukturformeln den Aufbau zweier verschiedener Wirkstoffe mit antimikrobiellen Eigenschaften;
- Fig. 4: in der Art einer Querschnittsdarstellung die sich zwischen zwei Stützlagen eines Filtermediums erstreckende Wirkstofflage mit antimikrobiellen Eigenschaften, wobei die Durchströmungsrichtung des Fluids durch das dahingehende Filtermedium mit einem Pfeil X wiedergegeben ist;
- Fig. 5: in der Art einer Querschnittdarstellung eine Herstellanlage, mit dem sich ein Verfahren durchführen lässt, das, auch fachsprachlich als Fouler-Verfahren bezeichnet, dem Beschichten eines vorzugsweise dreilagigen Faservliesstoffes dient, wobei in dem prinzipiell dargestellten Beschichtungsbad sich der Wirkstoff oder gegebenenfalls ein Wirkstoff zusammen mit einem Bindermaterial befindet.

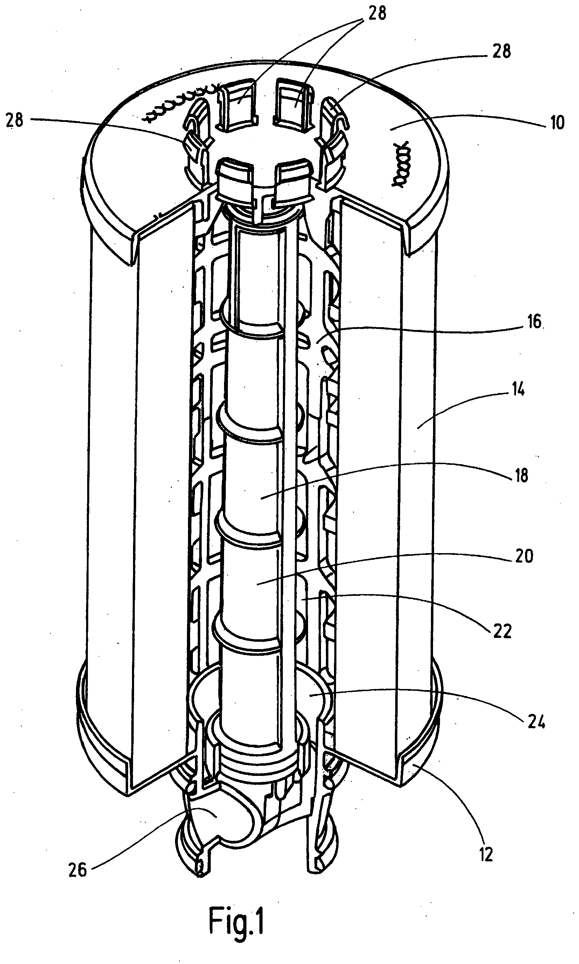

Das in Fig. 1 dargestellte Filterelement ist in der Art eines Kraftstofffilters ausgebildet, insbesondere für (Bio-)Dieselkraftstoff. Das Filterelement ist Teil eines nicht gezeigten Kraftstoffversorgungssystems für einen Verbrennungsmotor, um den genannten mineralischen Dieselkraftstoff, Bio-Diesel, synthetischen Diesel oder Dieselöl vor dem Verbrennen im Motor von Partikelverschmutzungen abzureinigen. Da im Diesel häufig Wasserbeimengungen anzutreffen sind, die den Verbrennungsprozess im Motor behindern können, erlaubt das in Fig. 1 gezeigte Filterelement auch die Abtrennung des Wassers aus dem Diesel. Sofern dahingehende Fluide keine Wasserbeimengungen aufweisen sollten, kann das Filterelement auch einfacher aufgebaut sein.

Das in Fig. 1 gezeigte Filterelement ist in der Art eines Wechsel- oder Austauschelementes konzipiert, d.h. bei verbrauchtem Filterelement kann dieses für eine erneute Partikelfiltration gegen ein Neuelement in einer nicht näher dargestellten Filtervorrichtung ausgetauscht werden. Der grundlegende Aufbau dahingehender Filterelemente sowie ihr Einsatz in Filtervorrichtungen ist Stand der Technik und beispielsweise in der WO 2011/107262 A1 aufgezeigt.

In der bei Filterelementen üblichen Weise sind an den beiden gegenüberliegenden Enden Endkappen 10, 12 vorgesehen, die Einfassungen für ein Filtermedium 14 bilden sowie für ein an dessen Innenseite anliegendes fluiddurchlässiges Stützrohr 16. In einem vorgebbaren radialen Abstand vom Stützrohr 16 entfernt befindet sich ein den inneren Filterhohlraum 18 rohrförmig umgebendes hydrophobes Sieb 20. Um eine Wasserabscheidung bewirken zu können, wird bei derartigen Kraftstofffiltern ein Filtermedium 14 benutzt, das für das vom Kraftstoff geführte Wasser koagulierend wirkt, so dass Wasser in Tröpfchenform ausfällt, das in dem Zwischenraum 22 zwischen der Innenumfangsseite des Stützrohres 16 und der Außenumfangsseite des hydrophoben Siebes 20 verbleibt und entsprechend absinkt, da das Sieb 20 für koagulierte Wassertropfen undurchlässig ist.

Der aufgezeigte Zwischenraum 22 bildet mithin eine Art Wasser-Abscheideeinrichtung aus, in dem das abgeschiedene Wasser aus dem Kraftstoff zur unteren Endkappe 12 hin absinkt. Das als Hohlzylinder ausgebildete Sieb 20 mündet in Blickrichtung auf die Fig. 1 gesehen an seinem unteren Ende unter Beibehalten eines Radialabstandes in einen vorzugsweise zylindrisch ausgebildeten Anschlussstutzen 24 aus, der einstückiger Bestandteil der unteren Endkappe 12 ist, und über den genannten Radialabstand kann Wasser das Filterelement verlassen, um in einen nicht dargestellten Wassertank oder zur Umgebung hin abgeführt zu werden, wozu der Anschlussstutzen 24 in den Tank in Form eines Wassersammelraumes ausmündet.

Das untere Ende des hydrophoben Siebes 20 mündet in einen weiteren Anschlussstutzen 26 aus, der fluidführend, insbesondere kraftstoffführend ist und der den Anschlussstutzen 24 mittig durchgreift, um dann im rechten Winkel aus dem Bereich des Anschlussstutzens 24 herausgeführt zu werden. An den dahingehenden weiteren Anschlussstutzen 26 ist dann das Kraftstoffleitungssystem angeschlossen, das einen Verbrennungsmotor mit Diesel oder Dieselöl versorgen kann. Während die untere Endkappe 12 von den genannten Anschlussstutzen 24, 26 durchgriffen ist, ist die obere Endkappe 10 als geschlossenes Deckelteil ausgebildet und weist vorspringende Rasten 28 auf zwecks Festlegen des Filterelementes in der nicht näher dargestellten Filtervorrichtung eines Kraftstofffilter- und Versorgungssystems.

Dass insoweit das Filterelement nach der Fig. 1 passierende Fluid, das außenumfangsseitig zum Filterelement von der Rohseite kommend dem Filterhohlraum 18 als Reinseite zugeführt ist, ist mithin durch das Filtermedium 14 von Partikelverschmutzung ebenso weitgehend befreit wie von Wasser. Sollte das Fluid nicht wasserhaltig sein, kann das Filtermedium 14 auf eine tropfenbildende, koagulierende Schicht oder auf ein dahingehend konzipiertes Zusatzelement verzichten.

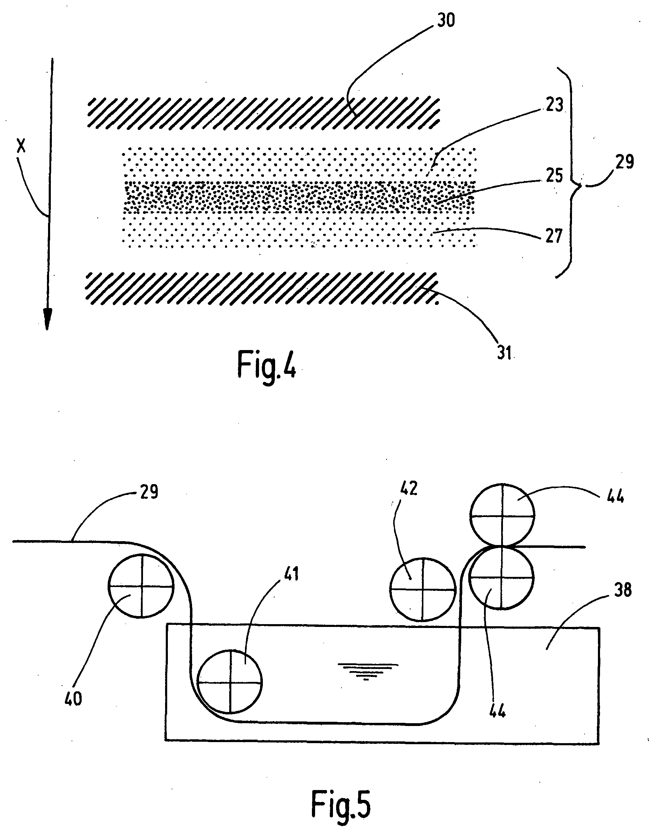

Das in Fig. 1 gezeigte Filtermedium 14 ist in nicht dargestellter plissierter Form einer Filtermatte um das zylindrische Stützrohr 16 herumgeführt, wobei durch die Plissierung die wirksame Filterfläche des Filtermediums 14 erhöht ist. Ungeachtet dessen kann anstelle eines plissierten Filtermediums 14, wie in Fig. 1 prinzipiell dargestellt, auch ein hohlzylindrisches Filtermedium für das Filterelement Verwendung finden. Des Weiteren ist das Filtermedium 14 gemäß der Darstellung nach der Fig. 4 mehrlagig, insbesondere dreilagig ausgebildet, wobei sich die dahingehende drei- oder mehrlagige Filtermatte als filtrierender Bestandteil des Filtermediums 14 sich zwischen zwei Stützgittern oder Stützlagen 30, 31 erstreckt. Die Fig. 4 gibt hier nur sehr grob die tatsächlichen Verhältnisse des Lagenaufbaus wieder, wobei der Lagenaufbau eine Vorfilterlage 23, eine Hauptfilterlage 25 sowie eine Schutzvlieslage 27 umfassen kann und in Abhängigkeit der Filtrationsaufgabe kann der dahingehende Dreilagenverbund 29 um weitere Lagen (nicht näher erläutert und dargestellt) vielfältig ergänzt werden. Die Durchströmungsrichtung des Fluids ist in der Fig. 4 in Pfeilrichtung und mit X gekennzeichnet angegeben.

Als dreilagiges Filtermedium 14 können Faservliesstoffe zum Einsatz kommen, die einen sogenannten β-Wert von 100 bei unterschiedlichen Partikelgrößen realisieren können. Bei einer Partikelgröße von beispielsweise 7 *µ*m, was dem Grunde nach der Porengröße des Filters oder der jeweiligen Filterlage entspricht, werden bei einem β₁₀₀-Wert durchschnittlich 100 Partikel mit einer Größe von *7 µ*m oder größer auf der Anströmseite des Filters zurückgehalten gegenüber einem dahingehenden Partikel von *7 µ*m oder größer, der durchgelassen auf der Abströmseite des Filters anzutreffen ist. Dies entspricht einem prozentualen Filterwirksamkeitswert von 99 %.

Als dreilagige Faservliessstoffe haben sich insbesondere die folgenden Materialien mit einem jeweiligen β₁₀₀-Wert bei einer Partikel- oder Porengröße von *7 µ*m, 10 *µ*m oder 30 *µ*m erwiesen. Es handelt sich hierbei gemäß nachfolgender Aufstellung:
- β₁₀₀ = *7 µ*m:: Ahlstrom Trinitex® Glass K959100 synthetische Fasern (PET) mit Mikroglasfasern und Binder
- β₁₀₀ = 10 *µ*m:: Ahlstrom Trinitex® K820100 synthetische Fasern (PET) und speziellem Latex-Binder
- β₁₀₀ = 30 *µ*m:: Ahlstrom Trinitex® K94970 synthetische Fasern (PET) und Binder

Die hier angesprochenen, unter der Markenbezeichnung Trinitex erhältlichen dreilagigen Faservliesstoffe erlauben eine gleichzeitige Verbindung von drei nassgelegten Schichten 23, 25, 27 in einem Arbeitsgang unter Erhalt des Dreilagenverbundes 29, wobei die jeweils äußere 23 und innere Schicht 27 aus voneinander verschiedenen Materialien bestehen können, insbesondere aus natürlichen und/oder synthetischen Fasern.

Die mit Kurzbezeichnung PET bezeichneten synthetischen Fasern sind solche aus Polyethylenmaterial, die insbesondere eine Gewebelage ergeben, in der ausschwemmsicher das jeweilige Fasermaterial für die Partikelabscheidung gehalten ist. Neben dem genannten Latex-Binder kommen solche Binder in Frage auf Epoxy- oder Acrylbasis. Andere Binderaufbauten zur Verbindung der Einzellagen sind hier möglich. Zum Schutz des empfindlichen Faservliesstoffes in nassgelegter, dreilagiger Form ist gemäß der Darstellung nach der Fig. 4 auf beiden Seiten, also sowohl anströmseitig als auch abströmseitig ein lagenförmiges Stützgitter 30, 31 vorhanden, das bevorzugt aus einem Polyamid-Werkstoff, insbesondere aus einem PA6-Werkstoff gebildet ist.

Die vorstehend angegebenen Feinheiten zu den einzelnen β₁₀₀-Werten bemisst sich nach der ISO-Norm 19348.

Um nun das mehrlagige Filtermedium 14 mit einem antimikrobiell wirkenden Wirkstoff zu versehen, dient ein Beschichtungsverfahren unter Einbezug eines Tauch- oder Beschichtungsbades 38, wie es beispielhaft in Fig. 5 dargestellt ist. Über Zuführrollen 40 und Umlenkrollen 41 wird der zu beschichtende dreilagige Faservliesstoff 29 dem Inneren des Tauchbades 38 zugeführt und dort beschichtet. Nach dem Beschichten wird der Faservliesstoff 29 über eine Transportrolle 42 aus dem Becken oder Bad 38 herausgeführt und über zwei paarweise zusammenwirkende Quetschwalzen 44 als Teil eines nicht näher dargestellten Kalandergestühls aus der Badeinrichtung für die weitere Verarbeitung aus dem Badbereich gebracht. Die dahingehenden Quetschwalzen 44 haben die Aufgabe, etwaig überschüssiges Beschichtungsmaterial aus dem Faservliesstoff 29 herauszupressen, wobei die Quetschwalzen 44 über dem Bad 38 derart angeordnet sind, dass überflüssiges Beschichtungsmaterial in das Tauchbad 38 zurückkehren kann. Ferner wird mittels der Quetschwalzen 44 der Aneinanderhalt der Einzellagen im Lagenverbund 29 verbessert. Dahingehende Tauchbad- oder Beschichtungsbadverfahren werden fachsprachlich auch mit Fouler-Verfahren bezeichnet.

Als mögliche antimikrobielle Wirkstoffe kommen insbesondere solche zum Einsatz, wie sie nachfolgend mit ihren handelsüblichen Markenbezeichnungen wiedergegeben sind:
- Sanitized® T99-19 (siliziumfunktionalisierte Tetraalkylammonium-Verbindung),
- Devan Chemicals Aegis™ (3-(tri-methoxysilyl) propyldimethyl octadecyl ammonium chlorid), und
- Sanitized® OIT (Octylisothiazolinon).

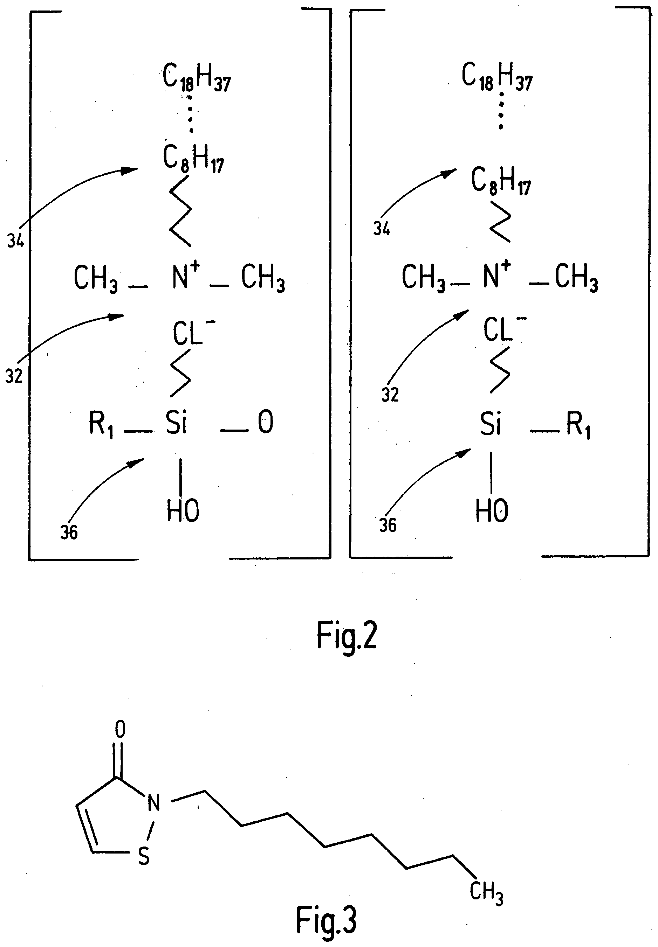

Der Wirkmechanismus für die antimikrobiellen Wirkstoffe Sanitized® T99-19 und Devan Chemicals Aegis™ ist in der Fig. 2 näher aufgezeigt. Die als Ganzes in Fig. 2 mit 32 bezeichnete Wirkstoffkomponente erlaubt die ionische Zerstörung der grundsätzlich negativ geladenen Bakterienzellwand durch Kurzschluss mit dem positiven Stickstoff-Molekül N⁺; die zweite als Ganzes mit 34 bezeichnete Wirkstoffkomponente dient hingegen der physischen Unterbrechung der Bakterienzellmembran durch die Kohlenwasserstoffketten des Wirkstoffes, wobei je nach eingesetztem antimikrobiellen Wirkstoff die Kohlenwasserstoffketten kürzer (C₈H₁₇) oder länger (C₁₈H₃₇) ausgebildet sind. Eine dritte als Ganzes mit 36 bezeichnete Wirkstoffkomponente erlaubt die chemische Bindung der Wirkstoffkomponenten 32 und 34 auf dem Faservliesstoff 29 durch Quervernetzung der Wirkstoffmoleküle, die bevorzugt in wässriger Lösung also hydrolisiert die angesprochene Vernetzung ermöglichen. Dabei geht in Fig. 2 gesehen das für den links dargestellten Wirkstoff aufgezeigte Sauerstoffatom eine Bindung mit der SI-Gruppe des rechts dargestellten Wirkstoffes ein, so dass sich ein Gesamtwirkstoff aus einzelnen, im Wesentlichen gleich aufgebauten (Teil-)Wirkstoffen ergibt.

Sofern in Fig. 3 prinzipiell der Wirkmechanismus für ein Breitbandbiozid in Form des Wirkstoffes Sanitized® OIT wiedergegeben ist, hat dieses nicht nur eine toxische Wirkung, sondern wirkt auch mutagen auf Bakterien, Mikroorganismen und Pilze. Zum Anlocken der jeweiligen biologischen Substanz oder Struktur dient wiederum eine Stickstoffgruppe, an der eine toxische und/oder mutagen wirkende Wirkstoffkomponente, vorzugsweise in Form einer CH₃-Gruppe, angelagert ist. Kommen dahingehende chemische Biozide zum Einsatz sind diese im Tauchbad 38, vorzugsweise mit einem Bindermaterial wie vorstehend näher wiedergegeben auf dem Faservliesstoff 29, insbesondere in intrinsischer Form einzulagern. Bei den in Fig. 2 aufgezeigten Wirkstoffkomponenten kann auf den Einsatz dahingehender Binder verzichtet werden, da die dahingehenden Stoffe sich sehr gut mit dem nassgelegten Faservliesstoff 29 verbinden, wozu die angesprochene Quervernetzung der Wirkstoffmoleküle in wässriger Lösung über die Komponente 36 mit beiträgt.

Anstelle des Tauchbades 38 können auch andere Beschichtungsverfahren zum Einsatz kommen, beispielsweise im Rahmen von Oberflächenbeschichtungen. Der jeweilige antimikrobielle Wirkstoff könnte dem Grunde nach auch auf eine separate Lagenschicht aufgebracht werden, die dann anströmseitig in die Plissierung des sonstigen Filtermediums 14 mit eingefaltet wird. Auch ist vorstellbar, eigenständige Filterlagen und Filtermedien nur mit dem jeweiligen antimikrobiellen Wirkstoff zu versehen, die dann insbesondere als Vorfilter zum eigentlichen Filterelement vorgeschaltet die Zerstörung der jeweiligen biologischen Substanz veranlasst.

Durch den Einsatz antimikrobieller Wirkstoffe ist eine Stabilisierung des Filterdifferenzdruckes gegenüber dem Einfluss von Mikroorganismen erreicht und der sogenannten Dieselpest mit ihrem schädigenden Einfluss wirksam begegnet.

## Patentansprüche

1. Kraftstoff Filterelement, zur Behandlung von Fluiden in Form von Diesel, mit einem Filtermedium (14), das von dem jeweiligen Fluid durchströmbar ist, **dadurch gekennzeichnet, dass** das Filtermedium (14) zumindest einen Wirkstoff mit antimikrobiellen Eigenschaften aufweist.

2. Kraftstoff-Filterelement nach Anspruch 1, **dadurch gekennzeichnet, dass** der jeweilige Wirkstoff mindestens eine Komponente (32) aufweist, die eine ionische Zerstörung einer Bakterienzellwand ermöglicht, und eine weitere Komponente (34) aufweist, die eine physische Unterbrechung einer Bakterienzellmembran ermöglicht.

3. Kraftstoff-Filterelement nach Anspruch 1 oder 2, **dadurch gekennzeichnet, dass** der jeweilige Wirkstoff eine dritte Komponente (36) aufweist, die eine chemische Bindung des Wirkstoffs auf dem Filtermaterial des Filtermediums (14) ermöglicht.

4. Kraftstoff-Filterelement nach einem der vorstehenden Ansprüche, **dadurch gekennzeichnet, dass** der jeweilige Wirkstoff eine Silikatverbindung, vorzugsweise eine Ammonium-Silikatverbindung, und/ oder mindestens ein Biozid, vorzugsweise ein Breitbandbiozid, aufweist.

5. Kraftstoff-Filterelement nach einem der vorstehenden Ansprüche, **dadurch gekennzeichnet, dass** die Silikatverbindung vorzugsweise eine siliziumfunktionalisierte Tetraalkylammonium-Verbindung oder eine 3-(tri-methoxylsilyl) propyldimethyl octadecyl ammonium chlorid-Verbindung ist.

6. Kraftstoff-Filterelement nach einem der vorstehenden Ansprüche, **dadurch gekennzeichnet, dass** der Biozid-Wirkstoff Octylisothiazolinon aufweist.

7. Kraftstoff-Filterelement nach einem der vorstehenden Ansprüche, **dadurch gekennzeichnet, dass** der jeweilige Wirkstoff einen Stickstoffanteil, vorzugsweise in Form positiv geladener Stickstoffmoleküle aufweist, das Bakterien, Mikroorganismen und Pilze anlockt, und dass Kohlenwasserstoffverbindungen, insbesondere in Kettenform die jeweilige Zellwand oder Zellmembran im angedockten Fall zerstören.

8. Kraftstoff-Filterelement nach einem der vorstehenden Ansprüche, **dadurch gekennzeichnet, dass** der jeweilige Wirkstoff hydrolisiert oder mittels eines speziellen Binders, vorzugsweise intrinsisch mit dem Filtermedium (14) verbunden ist.

9. Kraftstoff-Filterelement nach einem der vorstehenden Ansprüche, **dadurch gekennzeichnet, dass** das Filtermedium (14) mehrlagig ausgebildet ist, und dass vorzugsweise eine Lage, die dem Fluid anströmseitig zugewandt ist, als Vlies oder Vliesstoff ausgebildet den jeweiligen Wirkstoff aufweist.

10. Kraftstoff-Filterelement nach einem der vorstehenden Ansprüche, **dadurch gekennzeichnet, dass** das Vlies oder der Vliesstoff selbst vorzugsweise 3-lagig (29) ausgebildet ist und sich gegenüber einem Kunststoffgitter (30, 31) abstützt, das vorzugsweise aus einem Polyamidwerkstoff besteht.

## Claims

1. A fuel filter element for treating fluids in the form of diesel, comprising a filter medium (14) through which the respective fluid can flow, **characterised in that** the filter medium (14) has at least one active substance with antimicrobial properties.

2. The fuel filter element according to Claim 1, **characterised in that** the respective active substance has at least one component (32) which enables ionic destruction of a bacterial cell wall and has another component (34) which enables physical disruption of a bacterial cell membrane.

3. The fuel filter element according to Claim 1 or 2, **characterised in that** the respective active substance has a third component (36) which enables chemical bonding of the active substance to the filter material of the filter medium (14).

4. The fuel filter element according to any of the preceding claims, **characterised in that** the respective active substance has a silicate compound, preferably an ammonium silicate compound and/or at least one biocide, preferably a broad-spectrum biocide.

5. The fuel filter element according to any of the preceding claims, **characterised in that** the silicate compound is preferably a silicon-functionalised tetraalkylammonium compound or a 3-(trimethoxylsilyl)propyldimethyl octadecyl ammonium chloride compound.

6. The fuel filter element according to any of the preceding claims, **characterised in that** the biocide active substance comprises octylisothiazolinone.

7. The fuel filter element according to any of the preceding claims, **characterised in that** the respective active substance has a nitrogen content, preferably in the form of positively-charged nitrogen molecules, that attracts bacteria, microorganisms and fungi, and that hydrocarbon compounds, in particular in chain form, destroy the respective cell wall or cell membrane in the attached case.

8. The fuel filter element according to any of the preceding claims, **characterised in that** the respective active substance is hydrolyzed or is preferably intrinsically bonded to the filter medium (14) by means of a special binder.

9. The fuel filter element according to any of the preceding claims, **characterised in that** the filter medium (14) is formed in multiple layers, and that preferably one layer which faces the fluid on the upstream side comprises the respective active substance configured as a non-woven or non-woven material).

10. The fuel filter element according to any of the preceding claims, **characterised in that** the non-woven or the non-woven material itself has a 3-layer configuration (29) and abuts against a plastic grid (30, 31) which is preferably made of a polyamide material.

## Revendications

1. Elément de filtration à carburant pour traiter des fluides sous forme de diesel, comprenant
un milieu (14) filtrant, qui peut être traversé par le fluide, **caractérisé en ce que** le milieu (14) filtrant a au moins une substance active à propriété antimicrobienne.

2. Elément de filtration à carburant suivant la revendication 1, **caractérisé en ce que** la substance active a au moins un constituant (32), qui rend possible une destruction ionique de la paroi cellulaire des bactéries et un autre constituant (34), qui rend possible une interruption physique d'une membrane cellulaire de bactérie.

3. Elément de filtration à carburant suivant la revendication 1 ou 2, **caractérisé en ce que** la substance active a un troisième constituant (36), qui rend possible une liaison chimique de la substance active sur la matière filtrante du milieu (14) filtrant.

4. Elément de filtration à carburant suivant l'une des revendications précédentes, **caractérisé en ce que** la substance active comporte un composé de silicate, de préférence un composé de silicate d'ammonium et/ou au moins un biocide, de préférence un biocide à bande large.

5. Elément de filtration à carburant suivant l'une des revendications précédentes, **caractérisé en ce que** le composé de silicate est de préférence un composé de tétraalcoylammonium fonctionnalisé au silicium ou un composé de chlorure de 3-(triméthoxylsilyl) propyldiméthyl octadécyl ammonium.

6. Elément de filtration à carburant suivant l'une des revendications précédentes, **caractérisé en ce que** la substance active du biocide comporte de l'octylisothiazolinone.

7. Elément de filtration à carburant suivant l'une des revendications précédentes, **caractérisé en ce que** la substance active a une proportion d'azote, de préférence sous la forme de molécules d'azote chargées positivement, qui attire des bactéries, des microorganismes et des champignons et **en ce que** des composés d'hydrocarbure, notamment sous forme de chaîne, détruisent la paroi cellulaire ou la membrane cellulaire s'ils sont attachés.

8. Elément de filtration à carburant suivant l'une des revendications précédentes, **caractérisé en ce que** la substance active est hydrolysée ou est reliée, de préférence intrinsèquement, au milieu (14) filtrant au moyen d'un liant spécial.

9. Elément de filtration à carburant suivant l'une des revendications précédentes, **caractérisé en ce que** le milieu (14) filtrant est constitué en plusieurs couches et **en ce que**, de préférence, une couche tournée vers le côté d'afflux du fluide, constituée sous la forme d'un voile ou d'un non-tissé, comporte la substance active.

10. Elément de filtration à carburant suivant l'une des revendications précédentes, **caractérisé en ce que** le voile ou le non-tissé est constitué soi-même, de préférence, de trois couches (29) et s'appuie sur une grille (30, 31) en matière plastique, de préférence en polyamide.
